# EUROPÄISCHE PATENTSCHRIFT

(11) **EP 0 517 117 B1**
(45) Veröffentlichungstag und Bekanntmachung des Hinweises auf die Patenterteilung: **10.08.1994**
(21) Anmeldenummer: 92109147.6
(22) Anmeldetag: 30.05.1992
(51) Int. Cl.: A01G 9/02

(54) **Pflanzkasten aus Holz**
Wooden plant container
Conteneur de plantes en bois

(30) Priorität: 04.06.1991 DE 9106853 U
(43) Veröffentlichungstag der Anmeldung: 09.12.1992
(73) Patentinhaber: W. BRÜGMANN & SOHN GMBH, D-44147 Dortmund (DE)
(72) Erfinder: Eiling, August, W-4406, Drensteinfurt 3 (DE)
(74) Vertreter: Schulze Horn, Stefan, Dipl.-Ing. M.Sc.

(56) Entgegenhaltungen:
- DE-A- 3 001 708
- DE-A- 3 412 477
- DE-A- 3 633 537
- DE-U- 8 626 887

## Beschreibung

Die Erfindung betrifft einen Pflanzkasten der im Oberbegriff des Anspruches 1 angegebenen Art.

Ein Pflanzkasten der genannten Art ist aus der DE-A-30 01 708 bekannt. Die Eckpfosten dieses Pflanzkastens bestehen aus Gewindestangen, die durch die an den Kastenecken liegenden Endbereiche der die Seitenwände bildenden Vierkantholz-Abschnitte verlaufen. Hierzu sind die Vierkantholz-Abschnitte mit speziellen abgestuften Bohrungen versehen, in welchen mittig ein die Bohrung in zwei Abschnitte unterteilender ringförmiger Absatz vorgesehen ist. Dieser Absatz dient als Anlage für Gewindehülsen, die auf die Gewindestangen aufschraubbar sind. Im zusammengebauten Zustand dieses Pflanzkastens liegen auf jeder Gewindestange jeweils ein Vierkantholz-Abschnitt und eine Hülse abwechselnd übereinander.

Der Herstellungsaufwand der Einzelteile und der Montageaufwand beim Zusammenbau dieses bekannten Pflanzkastens sind sehr hoch. Außerdem wird bei dem bekannten Pflanzkasten als nachteilig angesehen, daß er weder von seinem konstruktiven Aufbau noch von seiner äußeren Gestaltung her in Pergolasysteme integrierbar ist, ohne die Gesamtkonstruktion und das gesamte Erscheinungsbild zu beeinträchtigen.

Es stellt sich daher die Aufgabe, einen Pflanzkasten der eingangs genannten Art zu schaffen, der zum einen stabil und haltbar ist und der zum anderen sowohl hinsichtlich seines konstruktiven Aufbaus als auch hinsichtlich seiner äußeren Gestaltung eine funktionelle und harmonische Integration in ein Pergolasystem oder eine Gartenmöblierung erlaubt.

Die Lösung dieser Aufgabe gelingt erfindungsgemäß durch einen Pflanzkasten der eingangs genannten Art mit den kennzeichnenden Merkmalen des Anspruches 1.

Der neue Pflanzkasten weist aufgrund der Gestaltung seiner Einzelteile und deren Zuordnung zueinander zum ersten eine besonders hohe Stabilität und Haltbarkeit und zum zweiten ein klares, Solidität ausstrahlendes Erscheinungsbild auf. Aufgrund seiner konstruktiven Merkmale kann der Pflanzkasten außer zur Aufnahme von Erde und Pflanzen problemlos für weitere Zwecke, insbesondere als tragendes Element für weitere Elemente, z.B. Teile eines Pergolasystems oder einer Gartenmöblierung, herangezogen werden.

Vorteilhafte Ausgestaltungen und Weiterbildungen der Erfindung sind in den Unteransprüchen angegeben.

Im folgenden werden Ausführungsgbeispiele des erfindungsgemäßen Pflanzkastens anhand einer Zeichnung erläutert. Die Figuren der Zeichnung zeigen:
- Figur 1 und 2: zwei Grundausführungen des Pflanzkastens in perspektivischer Ansicht,
- Figur 3 und 4: jeweils einen Eckbereich der Pflanzkästen gemäß Figur 1 und 2 in Aufsicht,
- Figur 5 und 6: den Pflanzkasten in zwei modular verlängerten Ausführungen in perspektivischer Ansicht.
- Figur 7 bis 10: den Pflanzkasten gemäß den Figuren 1, 2, 5 und 6 jeweils mit nach oben hin verlängerten Pfosten,
- Figur 11 bis 16: den Pflanzkasten mit nach oben verlängerten Pfosten und zwischen diesen angebrachten Rankgittern in unterschiedlichen Ausführungen und
- Figur 17: zwei Pflanzkästen gemäß Figur 1 in einer Verwendung als Tragkonstruktion für eine Sitzbank.

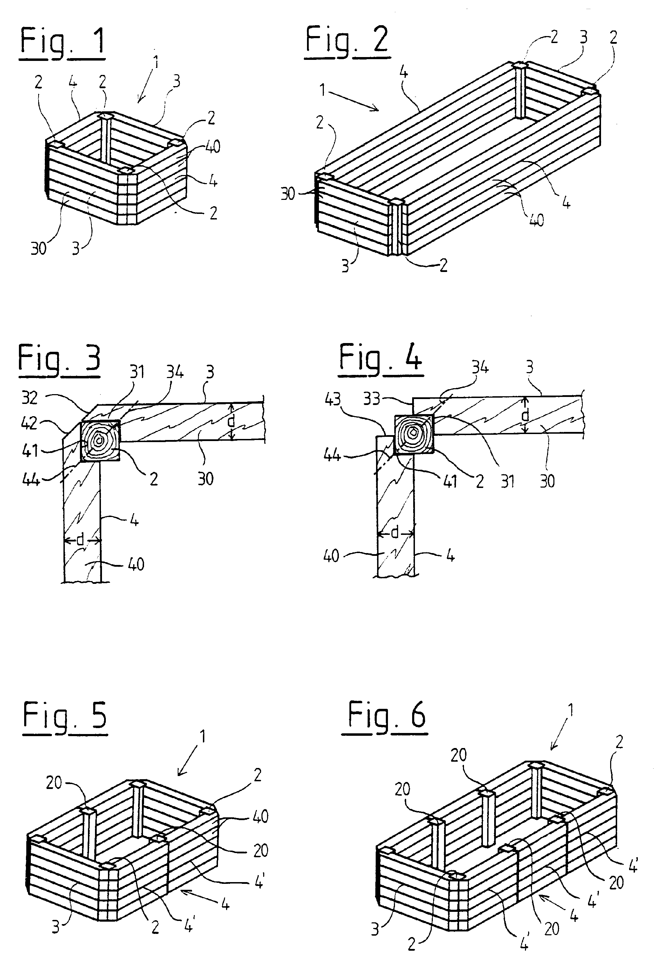

Wie die Figuren 1 und 2 der Zeichnung zeigen, bestehen die hier gezeigten ersten Ausführungsbeispiele des Pflanzkastens 1 aus jeweils vier Eckpfosten 2 und vier dazwischen angeordneten Seitenwänden 3 bzw. 4. Die Eckpfosten 2 sind jweils vertikal verlaufende Vierkanthölzer, die hier einen quadratischen Querschnitt aufweisen. Die Seitenwände 3 bzw. 4 bestehen aus Vierkantholz-Abschnitten 30 bzw. 40, die senkrecht zu den Eckpfosten 2 verlaufen und aufeinanderliegend parallel zueinander angeordnet sind. In den gezeigten Ausführungsbeispielen entspricht der Querschnitt der Vierkantholz-Abschnitte 30 bzw. 40 dem Querschnitt der Eckpfosten 2. Zur Verbindung der einzelnen Vierkantholz-Abschnitte 30 bzw. 40 der Seitenwände 3 bzw. 4 mit den Eckpfosten 2 sind die einzelnen Vierkantholz-Abschnitte 30 und 40 an ihren Enden mit jeweils einer Ausklinkung versehen, die im Detail in den Figuren 3 und 4 gezeigt ist.

Figur 3 zeigt zunächst den einen Eckbereich des Pflanzkastens 1 gemäß Figur 1 in Aufsicht von oben, wobei besonders der quadratische Querschnitt des Eckpfostens 2 deutlich wird. Die an diesen Eckpfosten 2 anstoßenden Vierkantholz-Abschnitte 30 und 40 der Seitenwände 3 und 4 sind an ihren Enden mit der bereits erwähnten Ausklinkung 31 bzw. 41 versehen. Hierdurch liegt jeder Vierkantholz-Abschnitt 30 bzw. 40 an zwei Seiten des Eckpfostens 2 an. Zur Verbindung von Eckpfosten 2 und Vierkantholz-Abschnitten 30 und 40 ist jeweils eine Verschraubung 34 bzw. 44 vorgesehen. Bei dem Ausführungsbeispiel gemäß Figur 3 sind die verbleibenden freien Enden der Vierkantholz-Anschnitte 30 und 40 jeweils mit einer unter 45° zur Längsrichtung der Seitenwände 3 und 4 verlaufenden Fase 32 bzw. 42 ausgebildet.

Bei dem Ausführungsbeispiel gemäß Figur 4, das den Eckbereich des Pfanzkastens 1 nach Figur 2 zeigt, ist die Verbindung zwischen dem Eckpfosten 2 und den Vierkantholz-Abschnitten 30 und 40 der Seitenwände 3 und 4 in gleicher Weise ausgeführt, wobei hier lediglich der Unterschied besteht, daß die verbleibenden freien Enden der Vierkantholz-Abschnitte 30 und 40 mit einer stumpfen Stirnfläche 33 bzw. 43 ausgebildet sind.

Bei der Eckgestaltung gemäß Figur 3 ist die Tiefe der Ausklinkungen 31 bzw. 41 in Längsrichtung der Seitenwände 3 bzw. 4 gesehen im wesentlichen so groß wie die Materialstärke d der Vierkantholz-Abschnitte 30 bzw. 40 der Seitenwände 3 bzw. 4. Hierdurch bilden bei dieser Ausführung die Fasen 32 und 42 eine gemeinsame, unter 45° zu den Ebenen der Seitenwände 3 bzw. 4 verlaufende Fläche. Im Unterschied dazu entspricht bei dem Ausführungsbeispiel gemäß Figur 4 die Tiefe der Ausklinkungen 31 und 41 in Längsrichtung der Seitenwände 3 und 4 etwa dem halben Maß der Materialstärke der Vierkantholz-Abschnitte 30 und 40 und dem damit identischen Querschnittsmaß des Eckpfostens 2, so daß sich hier ein gestufter Verlauf der Außenkontur des Pflanzkastens in Aufsicht ergibt, wie ihn Figur 4 gezeigt. Außerdem können die in dieser Art ausgeführten Vierkantholz-Abschnitte 30 bzw. 40 auch in miteinander fluchtender Lage angeordnet werden, wie dies in den Figuren 5 und 6 gezeigt ist.

Die Figuren 5 und 6 zeigen zwei weitere Ausführungen des Pflanzkastens 1, wobei hier die Pflanzkästen 1 nach Art eines Baukastensystems modular verlängert sind.

Der Pflanzkasten 1 gemäß Figur 5 besitzt dabei zwei Stirn-Seitenwände 3, die den Seitenwänden (3) des Pflanzkastens 1 gemäß Figur 1 entsprechen, sowie zwei Längs-Seitenwände 4, die aus je zwei Seitenwand-Teilstücken 4′ gebildet sind, die miteinander fluchten und die im Bereich jeweils eines Zwischenpfostens 20 mittig aneinanderstoßen. Die Eckpfosten 2 sind wieder an den vier Ecken des Pflanzkastens 1 in der üblichen Art und Weise angeordnet. Die Seitenwand-Teilstücke 4′ der Seitenwand 4 bestehen für sich wiederum aus jeweils einer Anzahl von übereinander angeordneten Vierkantholz-Abschnitten 40, die aber hier mit unterschiedlich gestalteten Endbereichen ausgebildet sind. Dabei sind jeweils die Enden, die den Eckpfosten 2 zugewandt sind, gemäß Figur 3 ausgestaltet, während die Enden der Vierkantholz-Abschnitte 40, die den Zwischenpfosten 20 benachbart sind, gemäß Figur 4 ausgebildet sind. Bei dem Pflanzkasten 1 gemäß Figur 5 ergibt sich also ein Grundriß, der in der einen Richtung etwa die doppelte Länge aufweist wie in der anderen Richtung.

Die Figur 6 der Zeichnung zeigt einen Pflanzkasten 1, der in ähnlicher Weise wie der Pflanzkasten 1 gemäß Figur 5 aufgebaut ist, wobei aber hier die zwei Längs-Seitenwände 4 aus je drei miteinander fluchtend angeordneten Seitenwand-Teilstücken 4′ zusammengesetzt sind. Die bei dem Pflanzkasten 1 gemäß Figur 6 im Bereich der Seitenwände 4 jeweils in der Mitte angeordneten Seitenwand-Teilstücke 4′ sind dabei an beiden Stirnenden gemäß Figur 4 ausgeführt, während die beiderseits davon angeordneten Seitenwand-Teilstücke 4′, die an jeweils einen der Eckpfosten 2 angrenzen, wieder die unterschiedliche Ausführung ihrer beiden Stirnenden aufweisen, wie sie zuvor anhand von Figur 5 beschrieben wurde. Bei dem Pflanzkasten 1 gemäß Figur 6 ergibt sich demnach ein Grundriß, dessen Länge in der einen Richtung etwa dreimal so groß ist wie in der anderen Richtung. Ersichtlicherweise läßt sich die Ausgestaltung der Pflanzkästen 1 in beiden Richtungen beliebig variieren, so daß Pflanzkästen 1 praktisch beliebiger Größe aus nur wenigen unterschiedlichen Einzelteilen zusammensetzbar sind.

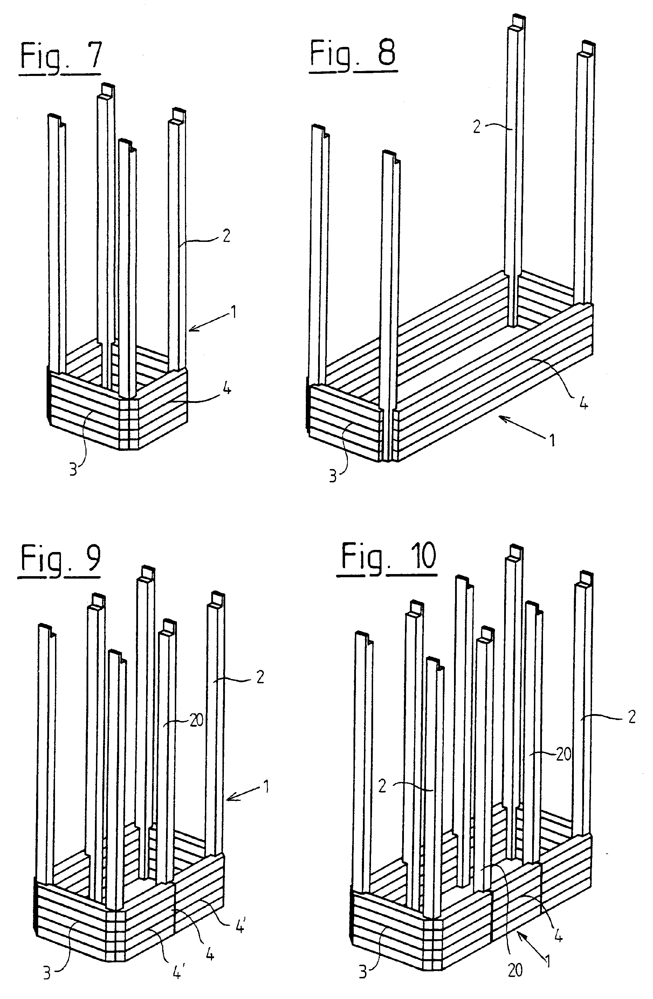

In den Figuren 7, 8, 9 und 10 der Zeichnung sind Ausführungsbeispiele für Pflanzkästen 1 dargestellt, bei denen der untere Teil jeweils den zuvor anhand der Figuren 1, 2, 5 und 6 beschriebenen Konstruktionen entspricht. Im Unterschied zu den zuerst beschriebenen Ausführungen sind aber hier die Eckpfosten 2 sowie die gegebenenfalls vorhandenen Zwischenpfosten 20 wesentlich über die Höhe der Seitenwände 3 bzw. 4 hinaus nach oben verlängert. An ihrem oberen Ende sind die Eckpfosten 2 bzw. Zwischenpfosten 20 jeweils mit einer Ausklinkung versehen, die zur Aufnahme und Anbringung von weiteren Elementen, z.B. Teilen eines Pergolasystems oder einer Gartenmöblierung, dienen. Die Länge der Eckpfosten 2 bzw. Zwischenpfosten 20 kann dabei praktisch frei gewählt werden und richtet sich nach dem jeweiligen Verwendungszweck. Damit erfüllen die Eckpfosten 2 und die gegebenenfalls vorhandenen Zwischenpfosten 20 des Pflanzkastens 1 zusätzlich zu ihrer eigentlichen Funktion, nämlich die einzelnen Vierkantholz-Abschnitte 30 und 40 der Seitenwände 3 und 4 zu halten, noch die weitere Funktion eines tragenden Bauteils, z.B. eines Ständers für Pergolabögen oder dergleichen. Selbstverständlich ist es auch möglich, nicht alle sondern nur einen Teil der Eckpfosten 2 oder Zwischenpfosten 20 über die Höhe der Seitenwände 3 und 4 des Pflanzkastens 1 hinaus zu verlängern, falls dies für den gewünschten Verwendungszweck sinnvoll ist.

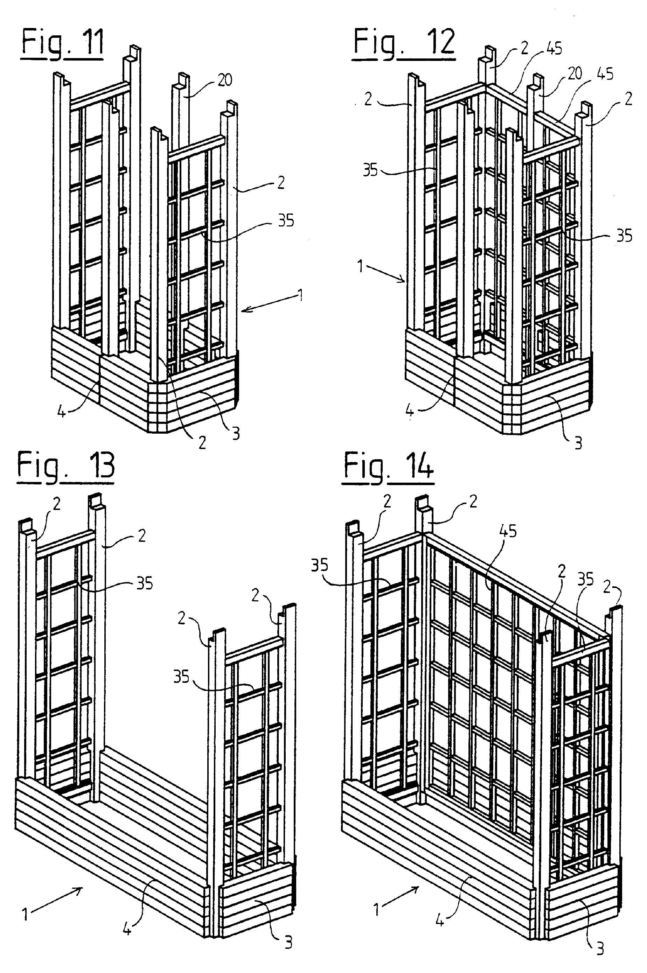

Die Figuren 11 bis 16 zeigen diverse Ausführungsbeispiele des Pflanzkastens 1 mit erhöhten Eckpfosten 2 und Zwischenpfosten 20 mit zwischen den Eckpfosten 2 bzw. Zwischenpfosten 20 angeordneten Rankgittern 35 bzw. 45. Insbesondere illustrieren die Figuren 11 bis 16 die vielfältigen Variationsmöglichkeiten, die der neue Pflanzkasten 1 bei Einsatz von nur wenigen Grundelementen bietet. Hinsichtlich der in den Figuren 11 bis 16 im übrigen verwendeten Bezugsziffern wird auf den vorangehenden Teil der Figurenbeschreibung verwiesen.

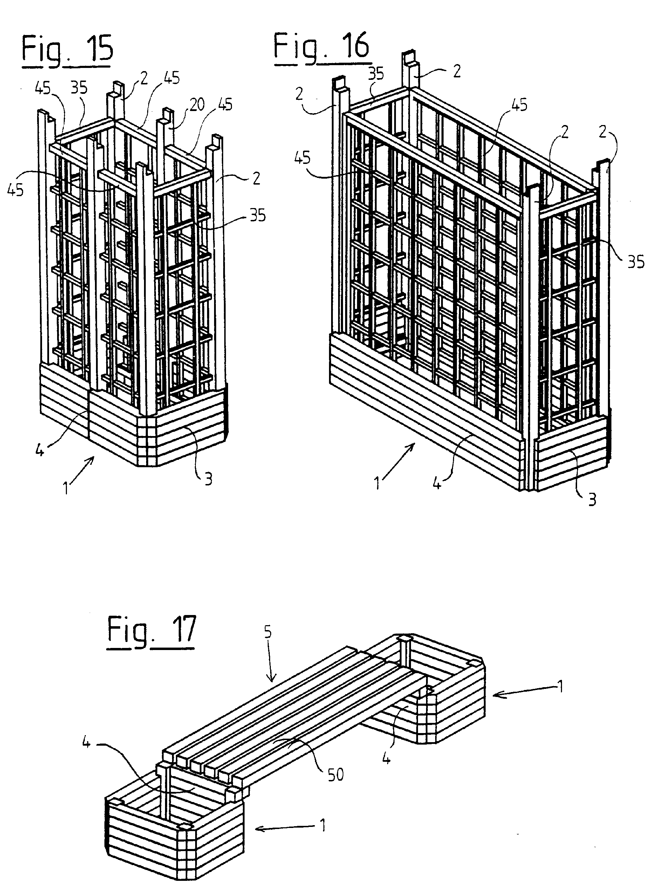

Schließlich ist in der Figur 17 noch eine Verwendung des Pflanzkastens 1 gezeigt, bei der dieser zusammen mit einem zweiten identischen Pflanzkasten 1 als tragende Unterkonstruktion für eine Sitzbank 5 dient. Dabei liegt die ebenfalls aus Vierkantholz-Abschnitten (50) gebildete Sitzbank 5 mit ihren Schmalseiten auf jeweils einer der Seitenwände 4 der beiden Pflanzkästen 1 auf. Zur Stabilisierung der Konstruktion kann selbstverständlich auch hier eine Verschraubung oder sonstige geeignete Verbindung vorgesehen sein. Weiterhin können die Pflanzkästen 1 zur Stabilisierung, insbesondere gegen Windangriff, mit einem Boden mit einer Beschwerung, z.B. in Form einer Betonplatte, versehen sein.

## Patentansprüche

1. Pflanzkasten aus Holz, insbesondere zur Integration in eine Pergola-Anlage, mit wenigstens vier Eckpfosten (2) und mit zwischen den Eckpfosten (2) angeordneten Seitenwänden, wobei die Seitenwände (3, 4) jeweils aus einer Anzahl von parallel zueinander und rechtwinklig zu den Eckpfosten (2) verlaufenden, aufeinanderliegenden Vierkantholz-Abschnitten (30, 40) bestehen,
dadurch gekennzeichnet,
- daß die Eckpfosten (2) aus Vierkanthölzern bestehen und
- daß die Vierkantholz-Abschnitte (30, 40) der Seitenwände (3, 4) an ihren Stirnenden jeweils mit einer Ausklinkung (31, 41) versehen sind und jeweils den anliegenden Eckpfosten (2) kantenübergreifend an zwei Seiten wenigstens teilweise überdecken.

2. Pflanzkasten nach Anspruch 1, dadurch gekennzeichnet, daß die Ausklinkungen (31, 41) an der zum Inneren des Pflanzkastens (1) hin weisenden Seite der Vierkantholz-Abschnitte (30, 40) der Seitenwände (3, 4) angebracht sind.

3. Pflanzkasten nach Anspruch 1 oder 2, dadurch gekennzeichnet, daß die Tiefe der Ausklinkung (31, 41) in Querrichtung der Seitenwand (3, 4) etwa der halben Materialstärke (d) der Vierkantholz-Abschnitte (30, 40) der Seitenwände (3, 4) entspricht.

4. Pflanzkasten nach einem der Ansprüche 1 bis 3, dadurch gekennzeichnet, daß die Tiefe der Ausklinkung (31, 41) in Längsrichtung der Seitenwand (3, 4) etwa der halben Materialstärke (d) eines der Vierkantholz-Abschnitte (30, 40) der Seitenwände (3, 4) entspricht und daß das äußere Stirnende der Vierkantholz-Abschnitte (30, 40) der Seitenwände (3, 4) jeweils mit einer senkrecht zur Seitenwand-Längsrichtung orientierten stumpfen Stirnfläche (33, 43) ausgebildet ist.

5. Pflanzkasten nach einem der Ansprüche 1 bis 4, dadurch gekennzeichnet, daß die Tiefe der Ausklinkung (31, 41) in Längsrichtung der Seitenwand (3, 4) etwa der Materialstärke (d) der Vierkantholz-Abschnitte (30, 40) der Seitenwände (3, 4) entspricht und daß das äußere Stirnende der Vierkantholz-Abschnitte (30, 40) der Seitenwände (3, 4) jeweils mit einer unter 45° zur Seitenwandfläche orientierten, nach außen weisenden gefasten Stirnfläche (32, 42) ausgebildet ist.

6. Pflanzkasten nach einem der Ansprüche 1 bis 5, dadurch gekennzeichnet, daß wenigstens zwei einander gegenüberliegende Seitenwände (3, 4) aus mehreren in Seitenwand-Längsrichtung miteinander fluchtenden, modulartig zusammengesetzten Seitenwand-Teilstücken (34′) mit zwischengeschalteten Zwischenpfosten (20) gebildet sind.

7. Pflanzkasten nach einem der Ansprüche 1 bis 6, dadurch gekennzeichnet, daß die Höhe der Eckpfosten (2) und der gegebenenfalls vorhandenen Zwischenpfosten (20) der Höhe der Seitenwände (3, 4) entspricht.

8. Pflanzkasten nach einem der Ansprüche 1 bis 6, dadurch gekennzeichnet, daß wenistens ein Teil der Eckpfosten (2) und der gegebenenfalls vorhandenen Zwischenpfosten (20) eine die Höhe der Seitenwände (3, 4) übersteigende Höhe aufweist.

9. Pflanzkasten nach Anspruch 8, dadurch gekennzeichnet, daß die Eckpfosten (2) und die gegebenenfalls vorhandenen Zwischenpfosten (20), deren Höhe die Höhe der Seitenwände (3, 4) übersteigt, an ihrem oberen Ende jeweils mit einer Ausnehmung oder Ausklinkung zur Aufnahme und Anbringung von weiteren Pergola-Elementen ausgebildet sind.

10. Pflanzkasten nach einem der Ansprüche 1 bis 9, dadurch gekennzeichnet, daß zumindest zwischen den Pfosten (2, 20) eines Paares von zwei benachbarten, nach oben hin verlängerten Pfosten (2, 20) ein Rankgitter und/oder ein Sichtschutzgitter (35, 45) angeordnet ist.

11. Pflanzkasten nach einem der Ansprüche 1 bis 10, dadurch gekennzeichnet, daß auf zwei von dessen Eckpfosten (2) oder auf eine von dessen Seitenwänden (3, 4) sowie auf zwei Eckpfosten (2) oder eine Seitenwand (3, 4) eines gleich ausgebildeten, beabstandet angeordneten zweiten Pflanzkastens (1) eine Sitzfläche oder -bank (5) auflegbar ist.

12. Pflanzkasten nach einem der Ansprüche 1 bis 11, dadurch gekennzeichnet, daß dieser mit einem Boden mit einer Beschwerung ausgebildet ist.

## Claims

1. Wooden plant container, particularly to be integrated in a pergola arrangement, comprising at least four corner posts (2) and side-walls arranged between the corner posts (2) with the side walls (3, 4) each consisting of a number of stacked squared beam segments (30, 40) extending in parallel with each other and rectangular to the corner posts (2),
**characterized in**
that the corner posts (2) consist of squared beams, and that the squared beam segments (30, 40) of the side-walls (3, 4) each are comprised with a notch (31, 41) at the front ends thereof and each at least partially overlap the edges of the abutting corner posts (2) at two sides thereof.

2. Wooden plant container according to claim 1, characterized in that the notches (31, 41) are positioned at the side of the squared beam segments (30, 40) of the side-walls (3, 4) facing the interior of the plant container (1).

3. Wooden plant container according to claim 1 or 2, characterized in that the depth of the notch (31, 41) in the transverse direction of the side-wall (3, 4) corresponds with about half of the material thickness (d) of the squared beam segments (30, 40) of the side-walls (3, 4).

4. Wooden plant container according to one of the claims 1 to 3, characterized in that the depth of the notch (31, 41) in the longitudinal direction of the side-wall (3, 4) corresponds with about half of the material thickness (d) of one of the squared beam segments (30, 40) of the side-walls (3, 4), and that the outer front ends of the squared beam segments (30, 40) of the side-walls (3, 4) are designed with a blunt front face (33, 43) positioned perpendicularly with the longitudinal direction of the side wall.

5. Wooden plant container according to one of the claims 1 to 4, characterized in that the depth of the notch (31, 41) in longitudinal direction of the side-wall (3, 4) corresponds with about half of the material thickness (d) of the squared beam segments (30, 40) of the side-walls (3, 4), and that the outer front ends of the squared beam segments (30, 40) of the sidewalls (3, 4) each are designed with a chamfered front face (32, 42) positioned in an angle of 45° in relation to the side-wall face and pointing outwards.

6. Wooden plant container according to one of the claims 1 to 5, characterized in that at least two side-walls (3, 4) opposing each other are formed of several side-wall parts (34′) in alignment in the longitudinal direction of the side-wall and designed in modular system with intermediate posts (20) in-between.

7. Wooden plant container according to one of the claims 1 to 6, characterized in that the heights of the corner posts (2) and the intermediate posts eventually present corerspond with the heights of the side-walls (3, 4).

8. Wooden plant container according to one of the claims 1 to 6, characterized in that at least some of the corner posts (2) and the intermediate posts (20) eventually present comprise a heigth larger than the height of the side-walls (3, 4).

9. Wooden plant container according to claim 8, characterized in that the corner posts (2) and the intermediate posts (20) eventually present with the heights thereof surpassing the heights of the sidewalls (3, 4) are designed at the upper ends thereof with a recess or notch for receiving and securing further pergola elements.

10. Wooden plant container according to one of the claims 1 to 9, characterized in that at least between the posts (2, 20) of a pair of two adjacent posts (2, 20) elongated upwards a creeper grid and/ or a view protecting grid (35, 45) is arranged.

11. Wooden plant container according to one of the claims 1 to 10, characterized in that a sitting area or bench (5) is positionable on two corner posts (2) thereof or on one of the side-walls (3, 4) and two corner posts (2) thereof or on a side-wall (3, 4) of an equally shaped spaced second plant container (1).

12. Wooden plant container according to one of the claims 1 to 11, characterized in that it is comprised with a loaded bottom.

## Revendications

1. Bac à plantes en bois, en particulier à intégrer dans une installation de pergola, comprenant au moins quatre piliers (2) de coins et des parois latérales disposées entre les piliers (2) de coins, les parois latérales (3, 4) se composant chacune d'un certain nombre de segments de bois rectangulaires superposés (30, 40) parallèles entre eux et d'un tracé perpendiculaire aux piliers (2) de coins,
caractérisé
en ce que les piliers (2) de coins se composent de bois rectangulaire et en ce que les segments de bois rectangulaires (30, 40) des parois latérales (3, 4) comportent à chacune de leurs extrémités frontales une encoche (31, 41) et recouvrent chacun au moins partiellement le pilier (2) de coin adjacent en recouvrant ses arêtes sur deux faces.

2. Bac à plante selon la revendication 1, caractérisé en ce que les encoches (31, 41) sont ménagées sur le côté des segments de bois rectangulaires (30, 40) des parois latérales (3, 4) qui est tourné vers l'intérieur du bac à plantes (1).

3. Bac à plantes selon la revendication 1 ou 2, caractérisé en ce que la profondeur de l'encoche (31, 41) correspond à peu près, selon la direction transversale de la paroi latérale (3, 4), à la moitié de l'épaisseur de matière (d) des segments de bois rectangulaires (30, 40) des parois latérales (3, 4).

4. Bac à plantes selon l'une des revendications 1 à 3, caractérisé en ce que la profondeur de l'encoche (31, 41) correspond à peu près, selon la direction longitudinale de la paroi (3, 4) à la moitié de l'épaisseur (d) de matière de l'un des segments de bois rectangulaires (30, 40) des parois latérales (3, 4) et en ce que chaque extrémité frontale extérieure des segments de bois rectangulaires (30,40) des parois latérales (3, 4) présente une surface frontale en retrait (33, 43) orientée perpendiculairement à la direction longitudinale de la paroi latérale.

5. Bac à plantes selon l'une des revendications 1 à 4, caractérisé en ce que la profondeur de l'encoche (31, 41) correspond à peu près, selon la direction longitudinale de la paroi latérale (3, 4), à l'épaisseur (d) de matière des segments de bois rectangulaires (30, 40) des parois latérales (3, 4) et en ce que chacune des extrémités frontales extérieures des segments de bois rectangulaires (30, 40) des parois latérales (3, 4) présente une surface frontale biseautée (32, 42) tournée vers l'extérieur, orientée à 45° par rapport à la surface de parois latérales.

6. Bac à plantes selon l'une des revendications 1 à 5 caractérisé en ce qu'au moins deux parois latérales opposées l'une à l'autre (3, 4) sont constituées de plusieurs éléments partiels (34′) de parois latérales, assemblés de manière modulaire et alignés entre eux selon la direction longitudinale de paroi latérale, des piliers intermédiaires (20) étant intercalés entre eux.

7. Bac à plantes selon l'une des revendications 1 à 6, caractérisé en ce que la hauteur des piliers (2) de coins et des piliers intermédiaires (20) éventuellement présents correspond à la hauteur des parois latérales (3, 4).

8. Bac à plantes selon l'une des revendications 1 à 6, caractérisé en ce que la hauteur d'au moins une partie des piliers (2) de coins et des piliers intermédiaires éventuellement présents (20) dépasse la hauteur des parois latérales (3, 4).

9. Bac à plantes selon la revendication 8, caractérisé en ce que les piliers (2) d'angle et les piliers intermédiaires éventuellement présents (20) dont la hauteur dépasse la hauteur de paroi latérale (3, 4) présentent chacun, à leur extrémité supérieure, un évidement ou une encoche pour la réception et l'installation d'autres éléments de pergola.

10. Bac à plantes selon l'une des revendications 1 à 9, caractérisé en ce qu'un treillis pour plantes grimpantes et/ou un treillis protégeant des regards (35, 45) est disposé au moins entre les piliers (2, 20) d'une paire formée de deux piliers voisins (2, 20) prolongés vers le haut.

11. Bac à plantes selon l'une des revendications 1 à 10, caractérisé en ce qu'une surface de siège ou un banc (5) peut être posé sur deux de ses piliers (2) de coins ou sur l'une de ses parois latérales (3, 4) ainsi que sur deux piliers (2) de coins ou sur une paroi latérale (3, 4) d'un deuxième bac à plantes (1) distant du premier et de même structure.

12. Bac à plantes selon l'une des revendications 1 à 11, caractérisé en ce que celui-ci comporte un fond pourvu d'une charge.
